# EUROPÄISCHE PATENTSCHRIFT

(11) **EP 0 752 168 B1**
(45) Veröffentlichungstag und Bekanntmachung des Hinweises auf die Patenterteilung: **08.09.1999**
(21) Anmeldenummer: 95911263.2
(22) Anmeldetag: 24.02.1995
(51) Int. Cl.: H02J 7/10

(54) **VERFAHREN UND VORRICHTUNG ZUR PFLEGE EINES AKKUS EINES GERÄTS**
PROCESS AND ARRANGEMENT FOR THE MAINTENANCE OF A BATTERY IN A DEVICE
PROCEDE ET DISPOSITIF D'ENTRETIEN D' UNE BATTERIE D' UN APPAREIL

(30) Priorität: 22.03.1994 DE 4409736
(43) Veröffentlichungstag der Anmeldung: 08.01.1997
(73) Patentinhaber: Braun Aktiengesellschaft, Frankfurt am Main (DE)
(72) Erfinder: CIMBAL, Jochen, D-61169 Friedberg (DE); KAISER, Manfred, D-61184 Karben (DE)
(86) Internationale Anmeldenummer: EP9500674
(87) Internationale Veröffentlichungsnummer: WO9526066

(56) Entgegenhaltungen:
- GB-A- 2 175 759
- US-A- 4 455 523
- US-A- 4 885 523

## Beschreibung

Die Erfindung betrifft ein Verfahren zur Pflege eines Akkus eines Geräts nach Patentanspruch 1 sowie eine Vorrichtung zur Durchführung des Verfahrens nach Anspruch 11.

Ein derartiges Verfahren ist bereits bekannt aus der Bedienungsanleitung zu dem Gerät "Braun Micron S", Druckdatum Oktober 1986. In dem Abschnitt unter der Überschrift "Akkupflege" ist dort beschrieben, daß die volle Ladekapazität des Akkus erhalten wird, wenn dieser zu Anfang, d.h. bei neuem Gerät, voll aufgeladen und durch Rasieren völlig entleert wird. Im Anschluß daran soll das Gerät wieder voll aufgeladen werden. Dieser Lade- und Entladevorgang soll dabei ca. zweimal im Jahr wiederholt werden. Dabei ist es notwendig, daß sich der Benutzer des Rasierers zumindest in etwa merkt, wann er zum letzten Mal diesen Entlade- und Ladezyklus des Akkus vorgenommen hat. Daraus muß der Benutzer dann wiederum selbsttätig den Zeitpunkt für den nächsten Entlade- und Ladezyklus bestimmen. Der Akku wird dabei über das Netz geladen, indem das Gerät mit einem Netzstecker an das Netz angeschlossen wird und die Netzspannung entsprechend gerichtet und gewandelt wird.

Weiterhin ist es aus dem Bereich elektrisch betriebener Zahnbürsten bekannt, eine Gerätehalterung der Zahnbürste mit einem Netzanschluß zu versehen. Der Akku der Zahnbürste wird dann induktiv geladen, wenn die Zahnbürste in die Gerätehalterung eingebracht wird.

Aus der DE 33 40 882 C1 ist es bekannt, im Rahmen einer Akkupflege einen Akku über einen Widerstand mit einem positiven Temperaturkoeffizienten zu entladen. Durch diesen Widerstand soll bei der Entladung eine möglichst gleichmäßige Temperatur des Akkus erzielt werden, indem sich die Leistungsaufnahme des Widerstandes entsprechend der Temperatur anpaßt, wobei gleichzeitig der Widerstand und der Akkumulator derart miteinander vebunden sind, daß ein Wärmeaustausch stattfindet. Wenn der Akku entladen ist, soll er dann wieder aufgeladen werden.

Weiterhin sind aus der DE 32 05 390 A1 und der DE 42 19 999 A1 Verfahren bekannt, bei denen unter Einsatz eines Mikroprozessors beim Laden eines Akkumulators zunächst eine Entladung vorgenommen wird.

Aus der US-A-4,455,523 ist ein Batterie-Überwachungssystem bekannt, das eine genaue Anzeige des jeweiligen Ladezustands der wiederaufladbaren Batterie liefert, und dabei auch die Alterung der Batterie berücksichtigt. Dies erfolgt dadurch, daß erstens die Gesamtbetriebszeit der Batterie und die Anzahl der Entlade-/Ladezyklen gezählt werden und zweitens eine Messung der aktuellen Batteriekapazität durch Tiefentladung der Batterie erfolgt. Diese dient auch zur Konditionierung der Batterie. Zur Ermittlung des jeweiligen Ladezustands wird ferner der Batteriestrom während des Betriebs gemessen.

Aufgabe der vorliegenden Erfindung ist es, dem Benutzer eines Gerätes mit wahlweisem Netz-/Akkubetrieb die Benutzung des derartigen Gerätes weitestgehend zu erleichtern und dabei eine möglichst lange Lebensdauer des Akkus auch dann zu erreichen, wenn das Gerät häufig am Netz betrieben wird.

Erfindungsgemäß wird diese Aufgabe durch die in den Ansprüchen 1 und 11 aufgeführten Merkmale gelöst. In vorteilhafter Weise erfolgt das Entladen und Laden des Akkus nur dann, wenn das Gerät mit dem Netz kontaktiert ist, so daß das Gerät nicht entladen wird, wenn ein anschließendes Laden nicht möglich ist. Dies bedeutet, daß das Gerät über den Netzstecker ans Netz angeschlossen sein muß oder daß die Gerätehalterung ans Netz angeschlossen sein und das Gerät sich in der Gerätehalterung befinden muß.

Demgegenüber zeigt sich, daß bei dem genannten Stand der Technik keine Angaben gemacht sind, wie eine automatische Erkennung des Zeitpunktes erfolgen könnte, zu dem eine derartige Akkupflege stattfinden sollte.

Durch die Maßnahmen nach Anspruch 2 wird vorteilhaft verhindert, daß ein versehentlichen Aus- und anschließendes Einschalten während einer Benutzung als separate Benutzungen gezählt wird.

Durch die Ausgestaltung nach Anspruch 3 kann verhindert werden, daß der Akku vollständig entladen wird, wenn während des Entladens des Akkus eine nicht vorgesehene Betriebsbedingung eintritt.

Durch die Maßnahme nach Anspruch 4 wird verhindert, daß der Akku entladen wird, wenn das Gerät nach der Benutzung vom Netz genommen wird, so daß ein Laden nach der Entladung nicht möglich wäre.

In vorteilhafter Ausgestaltung nach Anspruch 5 werden Leerzustände des Akkus, die während des normalen Betriebes erreicht werden, in dieses Verfahren zur Pflege des Akkus einbezogen. D.h., daß der Entlade- und Ladevorgang nach der Erfindung nicht unnötig oft vorgenommen wird.

In weiterer vorteilhafter Ausgestaltung nach Anspruch 6 wird dem Benutzer des Gerätes dieser Entlade- und Ladevorgang des Akkus über das Display angezeigt. Dies ist insbesondere in solchen Geräten vorteilhaft, in denen über ein Display der aktuelle Lade- zustand des Akkus angezeigt wird. Dieses Display wird dann während dem Entlade- und anschließenden Ladevorgangs normal angesteuert, so daß der Benutzer aufgrund der sich ändernden Anzeige des Display den Entlade- und Ladevorgang als solchen erkennen kann.

In einer besonders vorteilhaften Ausgestaltung nach Anspruch 7 kann dem Benutzer dann durch ein zusätzliches Symbol auf dem Display dieser Entlade- und Ladevorgang explizit angezeigt werden. Als Symbol bietet sich beispielsweise ein Netzstecker an, der durchkreuzt dargestellt ist. Dadurch wird dem Benutzer signalisiert, daß er während des Entlade- und anschließenden Ladevorganges den Netzstecker nicht ziehen darf, so daß ein Laden des Gerätes sicher möglich ist.

Bei dem Gegenstand nach Anspruch 8 wird gewährleistet, daß der Entlade-/Ladezyklus nur dann vorgenommenwird, wenn der Zyklus zwischen zwei Benutzungen abgeschlossen werden kann.

Gemäß Anspruch 9 wird gewährleistet, daß der Zyklus nur dann stattfindet, wenn die Zeiten zwischen den Benutzungen regelmäßig lang genug waren.

Gemäß Anspruch 10 wird gewährleistet, daß der Zyklus erst dann vorgenommen wird, wenn die Zeiten zwischen den Benutzungen in einem vergangenen Zeitraum regelmäßig lang genug waren.

Ein Ausführungsbeispiel der Erfindung ist in der Zeichnung dargestellt. Es zeigt:
- Fig. 1: ein Ablaufdiagramm des Verfahrens,
- Fig. 2: eine Darstellung der für die Durchführung des erfindungsgemäßen Verfahrens benötigten Bauteile,
- Fig. 3: ein Display, in dem dem Benutzer der Beginn eines Entlade- und Ladezyklus des Akkumulators angezeigt wird,
- Fig. 4: ein Blockschaltbild des Verfahrensablaufes, wenn der Akku während des Betriebs entladen wird und
- Fig. 5: eine Variation eines Teiles des Ablaufdiagrammes.

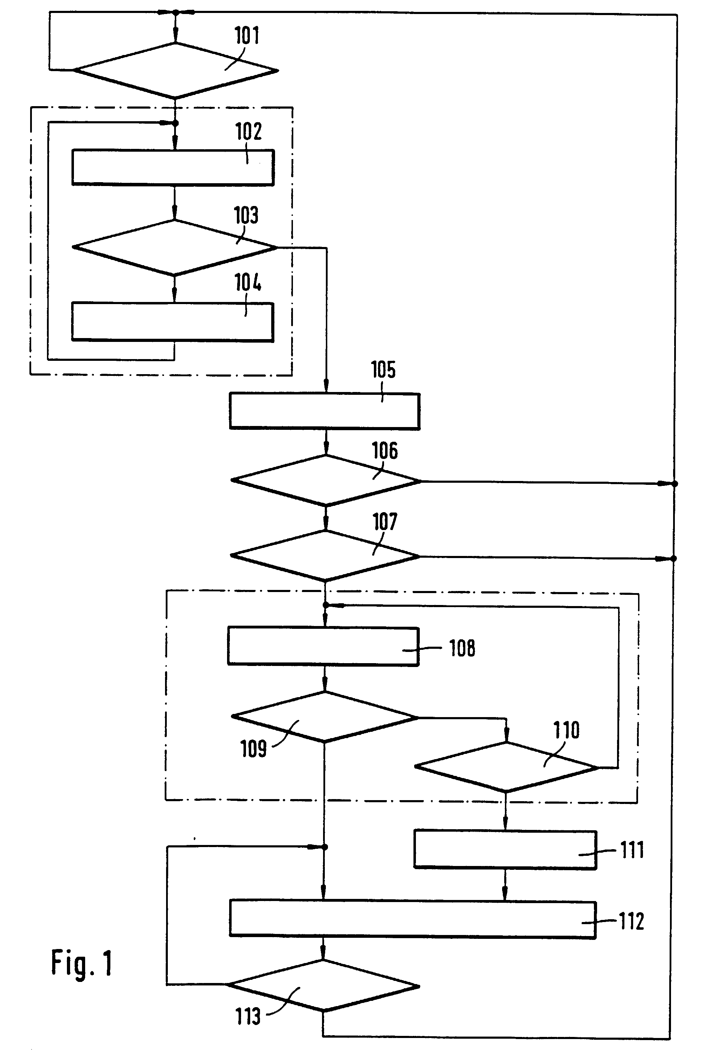

Gemäß einer Ausgestaltung eines Ausführungsbeispiels nach Fig. 1 wird in einem Schritt 101 geprüft, ob ein Betriebsbeginn des Gerätes vorliegt, d.h. ob das Gerät eingeschaltet wird. Im vorliegenden Ausführungsbeispiel ist das Gerät ein Rasierapparat.

Ist dies der Fall, erfolgt ein Übergang zu dem Schritt 102, in dem ein Zeitfenster gestartet wird. In dem Schritt 103 wird geprüft, ob während dieses Zeitfensters ein erneuter Betriebsbeginn vorliegt. Wenn vor Ablauf dieses Zeitfensters ein erneuter Betriebsbeginn vorliegt, ist davon auszugehen, daß es sich beispielsweise um ein versehentliches Ein/Ausschalten während einer Rasur handelt, so daß dies nicht als gesonderte Rasuren gezählt wird. Wird also gemäß dem Schritt 103 vor Ablauf des Zeitfensters ein erneuter Betriebsbeginn registriert, erfolgt in dem Schritt 104 ein Reset des Zeitfensters, d.h. die Zeitdauer, ab der geschlossen wird, daß es sich um einen erneuten Rasiervorgang handelt, beginnt von neuem zu zählen. Es erfolgt dann ein Übergang zu dem Schritt 102. Dieses Zeitfenster kann dabei in der Größenordnung von ca. 10 Minuten liegen.

Wird während dieses Zeitfensters kein erneuter Betriebsbeginn registriert, erfolgt ein Übergang zu dem Schritt 105. In dem Schritt 105 wird ein Zähler inkrementiert, der die einzelnen Rasiervorgänge, d.h. die Benutzungen des Rasierers, zählt. Gleichzeitig erfolgt in dem Schritt 105 ein Reset des Zeitfensters. In dem Schritt 106 wird dann überprüft, ob der Zähler- stand größer oder gleich einem vorgegebenen Maximalwert ist, d.h. ob die Zahl der Benutzungen eine vorgegebene Häufigkeit erreicht hat. Dieser Maximalwert ist dabei so gewählt, daß in einem Zeitraum von einigen Monaten ein Entladen und anschließendes Laden des Akkus erfolgt. Geht man davon aus, daß der Benutzer eines Rasierapparates sich einmal am Tag rasiert und ein Laden bzw. Entladen ca. alle 6 Monate erfolgen soll, kann dieses Maximum des Zählerstandes beispielsweise in der Größenordnung von 180 liegen. Ist dieser Zählerstand also kleiner als sein Maximum, erfolgt ebenfalls wieder ein Übergang zu dem Schritt 101. Hat dieser Zählerstand sein Maximum erreicht, erfolgt ein Übergang zu dem Schritt 107.

Dort wird nach Ablauf einer bestimmten Zeitdauer geprüft, ob ein Entladen und anschließendes Laden des Akkus vorgenommen werden soll. Dieser Ablauf der bestimmten Zeitdauer dient dazu, zu verhindern, daß zwar unmittelbar nach der Rasur die Bedingungen für den Entlade- und Ladezyklus vorliegen, d.h., daß der Rasierapparat dann ans Netz angeschlossen ist, aber dann nach relativ kurzer Zeit vom Netz genommen wird, beispielsweise weil der Benutzer eine Reise antritt. Durch den Ablauf der bestimmten Zeitdauer, die in der Größenordnung einer halben bis einer Stunde liegen kann, wird in diesem Fall der Beginn eines Entlade-/Ladezyklus vermieden.

Nach Ablauf dieser Zeitdauer erfolgt also in dem Schritt 107 eine Überprüfung, ob das Gerät nach wie vor an das Netz angeschlossen ist. Dabei kann auch vorteilhaft zusätzlich geprüft werden, ob die Netzspannung oberhalb eines Schwellwertes von beispielsweise 100 V liegt. Dadurch wird der Entlade-/Ladezyklus vorteilhaft dann vermieden, wenn das Gerät beispielsweise an eine 12 V-Gleichspannungsquelle eines Autos, Bootes oder Campingmobiles angeschlossen ist und deswegen der Ladevorgang vergleichsweise lange dauern würde.

In dem Schritt 107 wird außerdem geprüft, ob das Gerät nicht in Betrieb ist. Außerdem kann in dem Schritt 107 geprüft werden, ob der Akku voll geladen ist. Dies kann beispielsweise erfolgen, indem der Übergang vom Zustand "Laden" auf den Zustand "Erhaltungsladung" erkannt wird. Dieser letzte Prüfschritt ist insbesondere dann sinnvoll, wenn die Überprüfung in dem Schritt 110 - wie unten ausgeführt - darauf beruht, zu prüfen, ob die fest vorgegebene Zeitdauer abgelaufen ist. Wenn der Akku dann nur vom Ladezustand "voll" entladen wird, ist sichergestellt, daß beim Beenden des Entladens ein definierter Entladezustand erreicht ist.

Ergibt eine der Überprüfungen in dem Schritt 107 ein negatives Ergebnis, erfolgt ein Übergang zu dem Schritt 101.

Wenn das Gerät an das Netz angeschlossen ist, wird der Akku in dem Schritt 108 entladen. Dies passiert dadurch, daß ein Widerstand an den Akku angeschlossen wird, so daß dieser Widerstand den Akku entlädt. Während dieses Schrittes 108 wird immer gleichzeitig in einem Schritt 109 geprüft, ob der Netzanschluß unterbrochen wird. In diesem Fall wird der Entlade- und Ladezyklus abgebrochen, es erfolgt ein Übergang zu dem Schritt 112 und sobald das Gerät wiederum ans Netz angeschlossen wird, erfolgt ein Laden des Akkus. Derselbe Abbruch des Lade- und Entladezyklus erfolgt gemäß der Überprüfung in dem Schritt 109, wenn das Gerät während der Dauer des Entladens von dem Benutzer eingeschaltet wird. Gleichzeitig wird in dem Schritt 110 geprüft, ob der Akku entladen ist. Dies kann beispielsweise erfolgen, indem der Widerstand für eine fest vorgegebene Zeitdauer an den Akku angeschlossen wird. Der Entladezustand des Akkus wird dann erkannt, wenn die vorgegebene Zeitdauer abgelaufen ist. Beispielsweise kann eine Zeit für das Entladen des Akkus eines Rasierapparates in der Größenordnung von 6 Stunden liegen. Ebenso ist es aber auch denkbar, während des Entladevorgangs den Ladezustand des Akkus zu beobachten und entsprechend den dann vorgegebenen Bedingungen, beispielsweise durch Messen der Klemmenspannung des Akkus, den entsprechenden Lade- bzw. Entladezustand des Akkus festzustellen.

Sobald dieser Akku entladen ist, d.h. leer ist, erfolgt in dem Schritt 111 ein Reset des Zählers.

Im Anschluß daran beginnt ein Schnelladen des Akkus gemäß dem Schritt 112. In dem Schritt 113 wird dabei geprüft, ob der Akku wiederum voll ist. Ist dies nicht der Fall, wird das Schnelladen gemäß dem Schritt 112 fortgesetzt.

Andernfalls erfolgt wiederum ein Übergang zu dem Schritt 101. In diesem Falle ist also das Zeitfenster auf Null gesetzt und der Zähler ist auf Null gesetzt, d.h. mit einem erneuten Betriebsbeginn beginnt das Verfahren neu ab dem Schritt 101 zu laufen. Bei Rasierapparaten liegt die Zeitdauer für das Schnelladen in der Größenordnung von 1 Stunde. Setzt man für die Zeitdauer, die vergeht, bevor in dem Schritt 107 geprüft wird, ob das Gerät noch an das Netz angeschlossen ist, eine Zeitdauer der Größenordnung von 1/2 bis 1 Stunde an, ergibt sich also insgesamt eine Wartezeit zuzüglich Entladezeit zuzüglich Ladezeit der Größenordnung von 7 bis 8 Stunden.

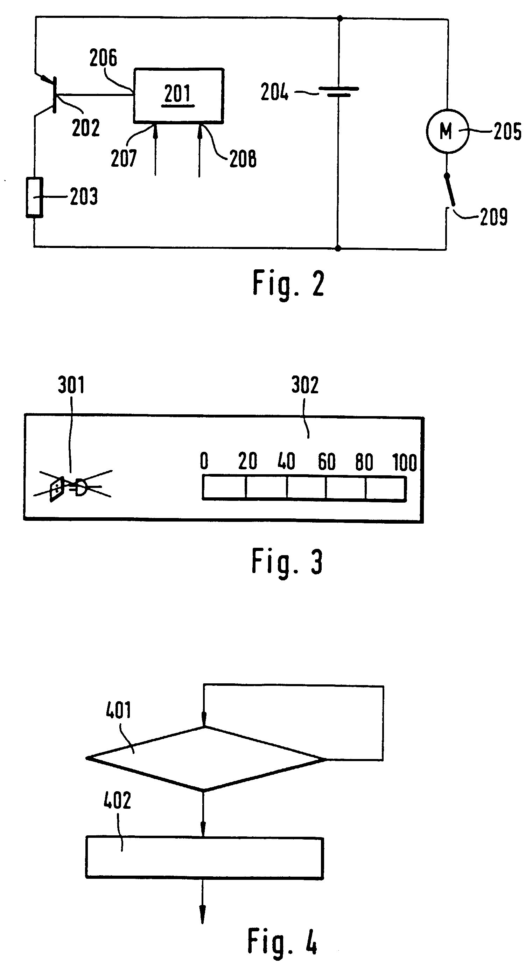

Fig. 2 zeigt ein Ausführungsbeispiel für die zur Durchführung des erfindungsgemäßen Verfahrens benötigten Bauteile. Einem Mikroprozessor sind dabei zwei Eingänge 207 und 208 zugeordnet.

Über den Eingang 208 wird dem Mikroprozessor ein Signal zugeführt, wenn ein Betriebsbeginn, d.h. ein Einschalten des Gerätes, erfolgt.

Über den Eingang 207 wird dem Mikroprozessor ein Signal zugeführt, ob das Gerät an das Netz angeschlossen ist oder nicht.

Wird die Gleichspannung aus einer gleichgerichteten Wechselspannung mittels eines Sperrwandlers gewonnen, kann beispielsweise auf der Primärseite des Sperrwandlers ein Widerstand an die Klemmen der Spannungsquelle vor oder nach der Gleichrichtung der Wechselspannung angeschlossen werden. Fällt über diesem Widerstand eine Spannung ab, ist das Gerät an das Netz angeschlossen.

In Abhängigkeit von diesen Eingangssignalen und dem in dem Mikroprozessor gebildeten Zeitfenster sowie dem Zähler, dem vorgegebenen Maximalwert des Zählerstandes und den Verfahrensschritten nach Fig. 1 wird in dem Mikroprozessor ein Ausgangssignal generiert, das über den Ausgang 206 ausgegeben wird. Über dieses Ausgangssignal 206 wird ein steuerbarer Schalter 202, der ein Transistor sein kann, angesteuert. Durch diesen steuerbaren Schalter kann ein Widerstand 203 an die Klemmen eines Akkumulators 204 geschlossen werden und diesen Akkumulator entladen. Gleichzeitig ist der Fig. 2 zu entnehmen, daß an diesen Akkumulator ebenfalls ein Motor 205 angeschlossen ist, der über einen vom Benutzer zu betätigenden Schalter 209 an den Akkumulator angeschlossen werden kann.

Fig. 3 zeigt die Darstellung eines Display, in dem der Benutzer den Beginn eines Entlade- und Ladezyklus des Akkumulators erkennen kann. Gemäß dem Abschnitt 302 werden dabei Displayteile angesteuert, die den Ladezustand des Akkumulators in Prozent anzeigen. Damit der Benutzer während des Entlade- und Ladezyklus durch die sich ändernde prozentuale Angabe der Ladekapazität des Akkumulators nicht irritiert wird (der Benutzer sieht ja, daß das Gerät ausgeschaltet ist und registriert trotzdem eine Anzeige der Änderung des Ladezustandes des Akkumulators), wird durch ein weiteres Symbol 301 dem Benutzer angezeigt, daß ein derartiger Entlade- und Ladezyklus begonnen hat. Dieses Symbol wird gemäß der Darstellung der Fig. 3 sinnfälligerweise so gewählt, daß dem Benutzer gleichzeitig angezeigt wird, daß er in diesem Zustand möglichst nicht den Netzstecker ziehen soll.

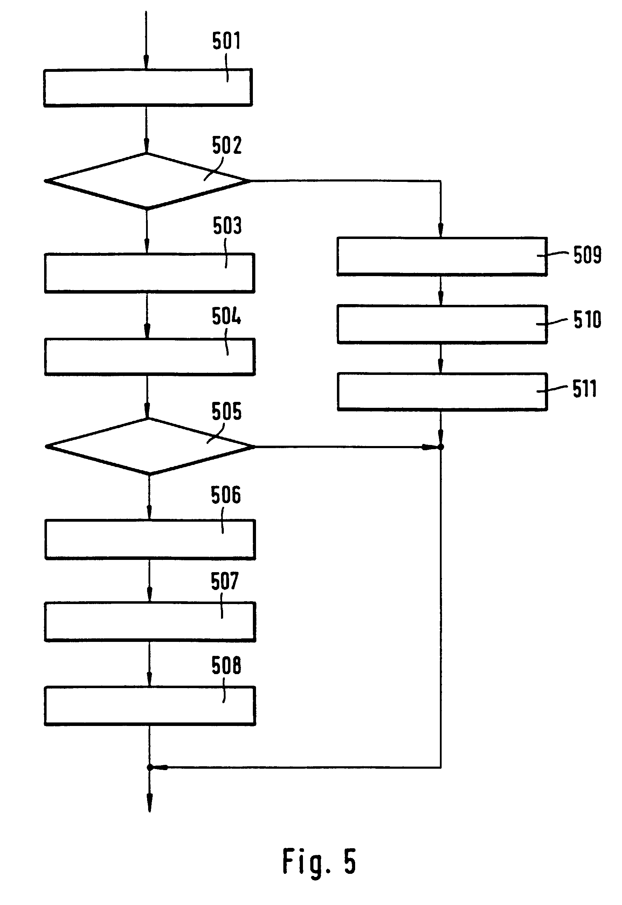

In Fig. 4 ist prinzipiell dargestellt, daß der Entlade- und Ladezyklus nicht vorgenommen werden muß, wenn der Akku des Gerätes während des Betriebs normal entladen wird. Dies erfolgt erfindungsgemäß dadurch, daß in den Verfahrensablauf nach Fig. 1 derart eingegriffen wird, daß in diesem Falle ein Reset des Zählers erfolgt. D.h., wenn der Akku während des Betriebs entladen wird, wird in dem Ablauf des erfindungsgemäßen Verfahrens nach Fig. 1 dieser Zustand so behandelt, als wäre der Entlade- und Ladezyklus aufgrund der zeitlichen Fälligkeit entsprechend den Schritten 105 und 106 der Fig. 1 bzw. entsprechend Fig. 5 vorgenommen worden.

Durch die Verfahrensschritte nach Fig. 5 wird in vorteilhafter Weise gewährleistet, daß ein Entlade- und Ladezyklus nur dann vorgenommen wird, wenn zwischen den einzelnen Benutzungen des Gerätes eine derartige Unterbrechungszeit liegt, daß die Dauer des Entlade- und Ladezyklus kürzer ist als die Unterbrechungszeit. Dadurch soll vermieden werden, daß ein Entlade- und Ladezyklus gestartet wird, wenn erkennbar ist, daß der Benutzer des Gerätes unter Umständen während der Dauer des Entlade- und Ladezyklus eine erneute Benutzung des Gerätes vornehmen will. Nach der Ausgestaltung der Verfahrensschritte nach Fig. 5 werden dabei die Benutzungshandlungen in Blöcke unterteilt. In vorteilhafter Weise werden dabei jeweils zehn Benutzungshandlungen zusammen betrachtet. Diese Blöcke der Benutzungshandlungen werden wiederum aufaddiert, um dann die Dauer der Benutzungen zu bilden. Diese Blöcke der einzelnen Benutzungshandlungen, deren Zahl in einem Block in der Größenordnung von 10 liegen kann, geht dabei nur in die Zählung der Benutzungshandlungen insgesamt ein, wenn jeweils zwischen aufeinanderfolgenden Benutzungshandlungen in einem Block die entsprechende Mindestzeitdauer als Unterbrechung zwischen den Benutzungshandlungen vergangen ist. Das bedeutet, daß Benutzungshandlungen nur dann gezählt werden, wenn zwischen mehreren Benutzungshandlungen jeweils die entsprechende Mindestunterbrechungszeit, d.h. eine Unterbrechungszeit, die größer ist als die Dauer des Entlade- und Ladezyklus, vergangen ist. Die Verfahrensschritte nach Fig. 5 ersetzen dabei in der Fig. 1 den Verfahrensschritt 105.

In dem Schritt 501 erfolgt ein Reset des Zeitfensters, das in dem Schritt 102 gestartet wurde. Gemäß dem Schritt 502 wird dann überprüft, ob seit der letzten Benutzungshandlung die erforderliche Mindestunterbrechungszeit vergangen ist. Dies erfolgt dadurch, indem geprüft wird, ob ein gestarteter Zeitblock inzwischen abgelaufen ist oder ob die aktuell festgestellte Benutzungshandlung innrhalb des Zeitblockes erfolgte. Dieser Zeitblock ist dabei zweckmäßigerweise so bemessen, daß die Größenordnung dieses Zeitblockes der Dauer des Entlade- und Ladezyklus entspricht.

Wurde in dem Schritt 502 festgestellt, daß seit der letzten Benutzungshandlung die erforderliche Mindestunterbrechungszeit abgelaufen war, d.h., daß der Zeitblock abgelaufen war, erfolgt in dem Schritt 503 ein Reset mit anschließendem Neustart des Zeitblockes. In dem Schritt 504 wird ein erster Zähler inkrementiert, der die Benutzungshandlungen in einem Block zählt. D.h. die Benutzungshandlungen, zwischen denen jeweils die erforderliche Mindestunterbrechungszeit vorgelegen haben muß, damit dieser Block und d.h. diese Menge der Benutzungshandlungen in die Anzahl der gezählten Benutzungshandlungen eingeht. Die Zahl der in diesem Block zusammengefaßten Benutzungshandlungen kann dabei in der Größenordnung von ca. 10 liegen. In dem Schritt 505 wird dann überprüft, ob dieser erste Zähler seinen vorgegebenen Maximalwert erreicht hat. Gemäß den obigen Ausführungen wird also überprüft, ob dieser erste Zähler den Wert 10 erreicht hat. Ist dies der Fall, wird ein zweiter Zähler inkrementiert. Dieser Zähler zählt die Blöcke der Benutzungshandlungen, die erfolgreich abgeschlossen wurden, d.h. die Blöcke, bei denen jeweils zwischen den einzelnen Benutzungshandlungen die Mindestunterbrechungszeit erreicht wurde. Nach diesem Schritt 506 erfolgt in dem Schritt 507 ein Reset des Zählers 1, d.h. des ersten Zählers, der die einzelnen Benutzungshandlungen in einem Block zählt. In dem Schritt 508 wird dann ein Zeitblock-Flag auf den Wert 0 gesetzt. Mit diesem Zeitblock-Flag wird angezeigt, daß ein Zeitblock erfolgreich beendet wurde, bei dem jeweils zwischen den einzelnen Benutzungshandlungen in einem Block die erforderliche Mindestunterbrechungszeit gegeben war. Wurde in dem Schritt 505 festgestellt, daß der Zähler 1 noch nicht seinen Maximalwert erreicht hat, erfolgt unmittelbar ein Übergang zu dem Schritt 106 nach Verfahren 1. Ebenso schließt sich an den Schritt 508 ein Übergang zu dem Schritt 106 der Fig. 1 an. Wurde in dem Schritt 502 festgestellt, daß der Zeitblock noch nicht abgelaufen war seit der letzten Benutzungshandlung, erfolgt in dem Schritt 509 ein Reset des Zählers 1. D.h. alle Benutzungshandlungen, die bisher in diesem Block gezählt wurden, werden durch diese erkannte Störung verworfen. Die erkannte Störung besteht darin, daß zwischen zwei Benutzungshandlungen nicht die erforderliche Mindestunterbrechungszeit gegeben war. In dem Schritt 510 erfolgt dann ein Reset und ein anschließender Neustart des Zeitblockes. In dem Schritt 511 wird das Zeitblock-Flag auf den Wert 1 gesetzt. Dadurch wird erkannt, daß beim Zählen der Benutzungshandlungen in einem Block eine Störung, d.h. ein Unterschreiten der Mindestunterbrechungszeit, vorgelegen hat. Im Anschluß an den Schritt 511 erfolgt dann ebenfalls ein Übergang zu dem Schritt 106 der Fig. 1. In dem Falle, daß der Schritt 105 der Fig. 1 durch die Verfahrensschritte gemäß Fig. 5 ersetzt wird, erfolgt in dem Schritt 106 eine Überprüfung des Zählers 2 auf seinen Maximalwert. Da dieser Zähler 2 Blöcke von Benutzungshandlungen zählt, kann entsprechend der gegebenen Zahl von Benutzungshandlungen in den Blöcken der Maximalwert des Zählers 2 in der Größenordnung von 15 bis 20 liegen. Entsprechend erfolgt in dem Schritt 111 ein Reset dieses Zählers 2.

In vorteilhafter Weise kann in dem Schritt 107 zusätzlich geprüft werden, ob das Zeitblock-Flag den Wert 0 hat. Dies ist nur dann der Fall, wenn der letzte Block von einzelnen Benutzungshandlungen erfolgreich durchgezählt wurde. D.h., daß in der letzten Zeit zwischen den einzelnen Benutzungshandlungen immer die erforderliche Mindestunterbrechungszeit erreicht wurde.

## Patentansprüche

1. Verfahren zur Pflege eines Akkus eines Geräts, bei dem in bestimmten Abständen der Akku einem Entlade- und Ladezyklus unterworfen wird, durch den dieser zumindest nahezu vollständig entladen wird, bei dem die Benutzungen des Geräts gezählt werden (105, 501 bis 511), und bei Erreichen einer vorgegebenen Anzahl von Benutzungen (106) ein Zyklus gestartet wird, sofern das Gerät ans Netz angeschlossen ist (107), in dem der Akku zunächst über einen Verbraucher vollständig entladen (108, 110) und anschließend wieder geladen wird (112, 113) und bei dem nach diesem Entlade-/Ladezyklus erneut die Benutzungen des Geräts gezählt werden (105).

2. Verfahren nach Anspruch 1, dadurch gekennzeichnet, daß beim Einschalten des Gerätes nur dann eine erneute Benutzung gezählt wird, wenn seit der letzten Benutzung eine bestimmte Zeit vergangen ist (102, 103).

3. Verfahren nach Anspruch 1 oder 2, dadurch gekennzeichnet, daß das Entladen des Akkus abgebrochen wird, wenn während des Entladens der Netzanschluß des Gerätes unterbrochen und/oder das Gerät eingeschaltet wird (109).

4. Verfahren nach einem der Ansprüche 1 bis 3, dadurch gekennzeichnet, daß der Entlade-/Ladezyklus erst nach Verstreichen einer bestimmten Zeitdauer nach einer beendeten Benutzung des Gerätes gestartet wird (107).

5. Verfahren nach einem der Ansprüche 1 bis 4, dadurch gekennzeichnet, daß die Benutzungen des Gerätes bis zum Einsetzen eines Entlade-/Ladezyklus erneut gezählt werden, wenn der Akku während des Betriebs des Gerätes entladen wird (401, 402).

6. Verfahren nach Anspruch 1, dadurch gekennzeichnet, daß dem Benutzer die Durchführung des Entlade-/Ladezyklus auf dem Display angezeigt wird (301, 302).

7. Verfahren nach Anspruch 6, dadurch gekennzeichnet, daß dem Benutzer ein Symbol angezeigt wird, daß der Netzstecker nicht gezogen werden darf (301).

8. Verfahren nach einem der Ansprüche 1 bis 7, dadurch gekennzeichnet, daß nur Benutzungen gezählt werden, bei denen seit der vorhergehenden Benutzung eine Mindestunterbrechungszeit gegeben ist.

9. Verfahren nach Anspruch 8, dadurch gekennzeichnet, daß mehrere Benutzungen nur dann gezählt werden, wenn bei jeder dieser Benutzungen seit der vorhergehenden Benutzung die Mindestunterbrechungszeit gegeben war.

10. Verfahren nach Anspruch 9, dadurch gekennzeichnet, daß der Entlade-/Ladezyklus erst dann durchgeführt wird, wenn bei mehreren vorausgehenden Benutzungen seit der jeweils vorhergehenden Benutzung die Mindestunterbrechungszeit gegeben war.

11. Vorrichtung zum Entladen und Laden eines Akkus eines Geräts gemäß dem Verfahren nach einem der vorhergehenden Ansprüche, dadurch gekennzeichnet, daß einem Mikroprozessor (201) ein Signal (207) zuführbar ist, das anzeigt, ob das Gerät ans Netz angeschlossen ist, daß der Mikroprozessor einen Zähler für die Benutzungen des Gerätes aufweist, daß in dem Mikroprozessor ein Vergleich stattfinden kann, ob der Zählerstand einen vorgegebenen Maximalwert überschreitet, daß von dem Mikroprozessor über einen Ausgang (206) ein steuerbarer Schalter (202), insbesondere ein Transistor, ansteuerbar ist, und daß über diesen steuerbaren Schalter (202) ein Verbraucher (203) mit den Klemmen des Akkus (204) verbindbar ist.

12. Vorrichtung nach Anspruch 11, dadurch gekennzeichnet, daß das Gerät ein Haarschneidapparat, insbesondere ein Rasierer oder Bartschneider ist.

## Claims

1. A method for conditioning an accumulator of an apparatus, in which the accumulator is subjected to a discharge/charge cycle at predetermined intervals in which the accumulator is at least nearly completely discharged, comprising the steps of counting a number of times the apparatus is used (105, 501 to 511) and, upon attainment of a predetermined number of uses (106), starting a cycle provided that the apparatus is connected to the power line (107) by completely discharging the accumulator through a load (108, 110) and subsequently recharging it (112, 113), and following this discharge/charge cycle, counting the uses of the apparatus again (105).

2. The method as claimed in claim 1, **characterized in that** on powering up the apparatus the usage counter is incremented only if a predetermined time period has elapsed since the last use (102, 103).

3. The method as claimed in claim 1 or claim 2, **characterized in that** the discharge cycle of the accumulator is aborted if during discharging the apparatus is disconnected from the power line and/or the apparatus is turned on (109).

4. The method as claimed in any one of the claims 1 to 3, **characterized in that** the discharge/charge cycle is not started until after a predetermined time period from a completed use of the apparatus has expired (107).

5. The method as claimed in any one of the claims 1 to 4, **characterized in that** a fresh count is made of the uses of the apparatus until the time when a discharge/charge cycle sets in if the accumulator is discharged during operation of the apparatus (401, 402).

6. The method as claimed in claim 1, **characterized in that** a display device indicates to the user that the discharge/charge cycle is being effected (301, 302).

7. The method as claimed in claim 6, **characterized in that** a symbol is provided warning the user against disconnecting the power line (301).

8. The method as claimed in any one of the claims 1 to 7, **characterized in that** only those uses are counted where a minimum time lapse has occurred since the previous use.

9. The method as claimed in claim 8, **characterized in that** a plurality of uses are counted only if the minimum time lapse has occurred between the previous use and each of the plurality of uses.

10. The method as claimed in claim 9, **characterized in that** the discharge/charge cycle is not effected until in several previous uses the minimum time lapse has occurred since each of said previous uses.

11. A device for discharging and charging an accumulator of an apparatus according to the method as claimed in any one of the preceding claims, **characterized in that** a signal (207) is deliverable to a microprocessor (201) to indicate whether the apparatus is connected to the power line, that the microprocessor includes a counter recording a number of uses of the apparatus, that the microprocessor is capable of performing a comparison to test whether the counter reading exceeds a predetermined maximum value, that the microprocessor is adapted to drive, via an output (206), a controllable switching device (202), in particular a transistor, and that a load (203) is adapted to be connected to the terminals of the accumulator (204) via said controllable switching device (202).

12. The device as claimed in claim 11, **characterized in that** the apparatus is a hair cutting apparatus, in particular a shaver or beard trimmer.

## Revendications

1. Procédé d'entretien d'une batterie d'un appareil, selon lequel, à des intervalles déterminés, la batterie est soumise à un cycle de décharge et de charge, par lequel celle-ci est au moins presque complètement déchargée, dans lequel les utilisations de l'appareil sont comptées (105, 501 à 511), et lors de l'obtention d'un nombre prédéterminé d'utilisations (106) un cycle est déclenché, pour autant que l'appareil soit raccordé au secteur (107), au cours duquel la batterie est tout d'abord complètement déchargée par l'intermédiaire d'un appareil d'utilisation (108, 110) et aussitôt après à nouveau chargée (112, 113) et dans lequel, après ce cycle de décharge/charge, les utilisations de l'appareil sont à nouveau comptées.

2. Procédé selon la revendication 1, caractérisé en ce que, lors de la mise en marche de l'appareil, seule une nouvelle utilisation est comptée, lorsque depuis la dernière utilisation s'est écoulé un temps déterminé (102, 103).

3. Procédé selon la revendication 1 ou 2, caractérisé en ce que la décharge de la batterie est interrompue lorsque, durant la décharge, le raccordement au secteur de l'appareil est interrompu et/ou l'appareil est mis en marche (109).

4. Procédé selon l'une quelconque des revendications 1 à 3, caractérisé en ce que le cycle de décharge/charge n'est déclenché qu'à l'expiration d'un temps déterminé après la fin d'une utilisation de l'appareil (107).

5. Procédé selon l'une quelconque des revendications 1 à 4, caractérisé en ce que les utilisations de l'appareil sont à nouveau comptées jusqu'au déclenchement d'un cycle de décharge/charge, lorsque la batterie est déchargée durant le fonctionnement de l'appareil (401, 402).

6. Procédé selon la revendication 1, caractérisé en ce que le déroulement du cycle de décharge/charge est indiqué à l'utilisateur sur le dispositif de visualisation (301, 302).

7. Procédé selon la revendication 6, caractérisé en ce qu'un symbole est indiqué à l'utilisateur, selon lequel la fiche de raccordement au secteur ne peut pas être retirée (301).

8. Procédé selon l'une quelconque des revendications 1 à 7, caractérisé en ce que seules sont comptées des utilisations, dans lesquelles un temps d'interruption minimal s'est écoulé depuis l'utilisation précédente.

9. Procédé selon la revendication 8, caractérisé en ce que plusieurs utilisations ne sont comptées que lorsque, lors de chacune de ces utilisations, le temps d'interruption minimal s'est écoulé depuis l'utilisation précédente.

10. Procédé selon la revendication 9, caractérisé en ce que le cycle de décharge/charge n'est accompli que lorsque, pour plusieurs utilisations précédentes, le temps d'interruption minimal s'est écoulé depuis chaque utilisation précédente.

11. Dispositif de décharge et de charge d'une batterie d'un appareil selon le procédé selon l'une quelconque des revendications précédentes, caractérisé en ce qu'à un microprocesseur (201) peut être appliqué un signal (207), qui indique si l'appareil est raccordé au secteur, en ce que le microprocesseur comporte un compteur pour les utilisations de l'appareil, en ce qu'une comparaison peut être effectuée dans le microprocesseur pour indiquer si l'état du compteur a dépassé une valeur maximale prescrite, en ce qu'un commutateur commandé (202), en particulier un transistor, peut être commandé par le microprocesseur par l'intermédiaire d'une sortie (206), et en ce que par l'intermédiaire de ce commutateur commandé (202), un appareil d'utilisation (203) peut être relié aux bornes de la batterie (204).

12. Dispositif selon la revendication 11, caractérisé en ce que l'appareil est une tondeuse, en particulier un rasoir ou un appareil à tailler la barbe.
